# EUROPEAN PATENT APPLICATION

(11) **EP 4 439 347 A1**
(43) Date of publication of application: **02.10.2024**
(21) Application number: 23165750.3
(22) Date of filing: 30.03.2023
(51) Int. Cl.: G06F 21/31, G06F 3/04883, G06V 40/13, G07F 7/10, H04W 12/68

(54) **MULTI-DIRECTION AND ROTARY SELECTION DATA ENTRY ON A TOUCH SCREEN**

(71) Applicant: THALES DIS FRANCE SAS, 92190 Meudon (FR); Thales DIS CPL Canada Inc., Ottawa, ON K2E 7M6 (CA)
(72) Inventor: JOSHI, Pankaj, Ottawa, K2G ON3 (CA); ALI, Asad Mahboob, AUSTIN, 78738 (US)
(74) Representative: Lotaut, Yacine Diaw

(57) **Abstract**

Provided is a device, application and method for multi-direction and rotary selection of individual data entry elements of an entry field for entering data in a touchscreen. The application detects a selection and visually overlays an alphanumeric short-list of single symbols oriented along a directional vector. It detects a scrolling of the short-list responsive to fingertip sliding to-or-fro in a direction of the orientated short-list. As an example a PIN may be entered in this unique manner to unlock the touchscreen of a mobile device. Other embodiments are disclosed.

## Description

### TECHNICAL FIELD

The present invention relates generally to computers and mobile devices, and more particularly, to user interface (UI) and password entry thereon.

### BACKGROUND

Most mobile devices include a touchscreen display as a user interface input device. It allows the user to enter a menu selection or data by placing a finger or other object at a location on the display screen that corresponds to the menu item, function or numerical data to be entered. A touch sensitive element detects the coordinates of the touch event and the meaning of the touch event is determined by the coordinate location and the corresponding menu or data button displayed on the screen associated with the touch sensitive element.

Screen lock is a common mobile device feature using touchscreen devices. It is designed to prevent unauthorized individuals from accessing the device. It's called a screen lock because it locks the screen from use. Only after unlocking the screen can an individual use the respective touchscreen device. Different mobile operating systems and different devices offer different screen lock solutions. In some, for example, the user can choose from either a Personal Identification Number (PIN), password or pattern. With a pattern, the user runs their finger across the touchscreen display in a specific pattern to unlock it. With a PIN, the user enters a sequence of at least four characters to unlock the touchscreen device. With a password, the user manually enters a password to unlock the touchscreen device, for example using a keyboard.

Users unlock their mobile phone multiple times a day, and it's probable that someone can see the individual entering in their PIN. This is known as a shoulder surfing attack, and describes a situation where an attacker can physically view the device display and keypad so as to obtain personal information. It is one of the few attack methods requiring the attacker to be physically close to the victim to succeed. Shoulder surfering, and observing the hand movement to guess the PIN, can be a threat in many situations during phone unlocking.

Accordingly, a more secure means for entering personal and private data on a touch screeen, including but not limited to, unlocking a touchscreen, is needed.

### BRIEF DESCRIPTION OF THE DRAWINGS

The accompanying drawings, which are incorporated in and constitute a part of this description, illustrate embodiments consistent with the invention and, together with the description, serve to explain the principles of the invention.
**FIG. 1A** illustrates a device for multi-direction selection of personal data in accordance with one embodiment;
**FIGS. 1B** depict an alphanumeric short-list oriented in a vertical vector in accordance with one embodiment;
**FIGS. 1C** depict an alphanumeric short-list oriented in a horizontal vector in accordance with one embodiment;
**FIG. 2A** illustrates a device for rotary selection and multi-direction selection of a Personal Identification Number (PIN) in accordance with one embodiment;
**FIG. 2B** shows a touchscreen with a representative set of starting digit positions in accordance with one embodiment;
**FIG. 2C** shows a touchscreen with PIN values after a swipe in accordance with one embodiment;
**FIG. 3A** shows a touchscreen that introduces a group button component for performing a concurrent group swipe operation in accordance with one embodiment;
**FIG. 3B** shows an exemplary illustration of a group swipe setup for "learning" a pattern and corresponding table in accordance with one embodiment;
**FIG. 3C** shows an exemplary illustration for applying a learned pattern using group swipe and corresponding table in accordance with one embodiment;
**FIG. 4** shows an exemplary illustration of a group swipe setup for applying an alternate pattern using group swipe and corresponding table in accordance with one embodiment; and
**FIG. 5** depicts an exemplary communication environment providing telecommunication, Internet and cloud services within an Identity and Access Management (IAM) ecosystem.

Specific embodiments in this invention have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Broadly speaking, touch screen devices accept data and user credentials in two ways. Information is either "typed" by the user by touching corresponding elements of a graphical keyboard. Or, alternatively, credentials may be entered by drawing a pattern on the screen. In either approach, the information or credentials are collected and sent to backend systems, usually in the same form. For example, if a pattern is used, it is sent to another system for user authentication. Patterns are easy to draw, but provide a low cryptographic entropy. Numerical, or alphanumeric, data in the form of password or PIN offer greater entropy compared to patterns, but run the risk of shoulder surfing.

To address these security concerns, provided herein is a device, application and method to uniquely enter data on a touch screen device in a manner not easily observed, or interpreted, by a shoulder surfer. The manner of data entry protects entry of private and personal data, and is uniquely controlled by the user such that data entry orientation and selection is alterable for each PIN or alphanumeric digit entry. More specifically, the user can selectively alter an orientation for individual entries of an entry field in real-time while entering the same PIN, or password. The backend system receiving the user credential will see the same value (PIN or password) but it will be entered through different user actions. The inventive context is applicable to short sensitive data entry, such as a PIN, on a touchscreen device, such as a laptop, computer, mobile phone or other electronic communication and display device.

One example use of the inventive solution is applicable to Thales' OneWelcome MobilePASS^{®} family of one-time password (OTP) software authentication solutions, which combines multi-direction rotary selection with the security of proven two-factor strong authentication with the convenience, simplicity, and ease of use of OTPs. Other examples that rely on data entry for authentication and transactions, and that can incorporate the inventive solution, include OneWelcome^{®} products that manage complexity of different eID's, privacy laws, and GDPR regulations. Integration of the inventive solution described herein with these products provides for improved protection against shoulder surfing, screen logging compromise, and user configurability exposure of data entered on a frontend User Interface (UI), without the need to change the backend system. It is also applicable to Digital ID government programs, and Thales' OneWelcome product families to manage cloud and web access with single sign-on and scenario-based access

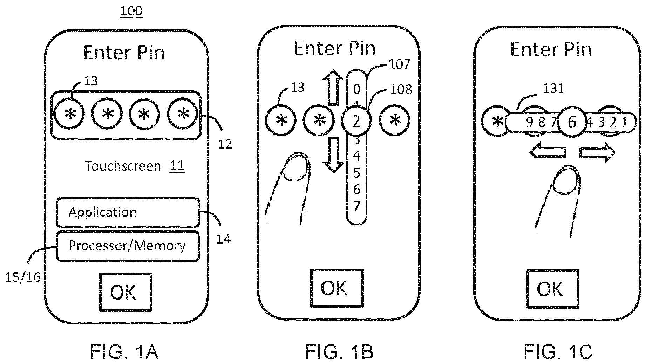

**FIG. 1A** illustrates a device **100** for multi-direction selection of data entry in accordance with one embodiment. The device **100** comprises a touchscreen display **11** presenting an entry field **12**, and an application **14** communicatively coupled to the touchscreen display **11.** A PIN is one example of a data entry type into the entry field **12** containing individual data entry elements **13.** Others are contemplated, including but not limited to strings, digits, and alphanumeric symbols. The application **14** can be a native program, installed app, or a downloaded app, or other process of the mobile device operating system. The application **14** can unlock the device, provides access to another apps or resources thereon, or perform other functions responsive to entry of the PIN, or other data, in the entry field **12.** It does this by configuring and executing certain operational steps presented ahead for performing the inventive method steps. For this purpose, the device **100** includes a processor **15** and memory **16** among other components, wherein the memory includes computer instructions which when executed by the processor causes the processor to perform the operational steps.

**FIGS. 1B** and **1C** depict embodiments where the application **14** displays the alphanumeric short-list **107** of single symbols oriented in one of a vertical vector and a horizontal vector, respectively. In all short-list orientations, the application **14**, detects a fingertip on, or over, the touchscreen, for instance, an entry containing an obfuscated symbol (*) in the entry field **12**. In this example, the entry field **12** contains four (4) entry elements **13** constituting the PIN, which can be any alphanumeric symbol, digit, or number. Responsive to the touching, the application **14** visually presents the alphanumeric short-list **107** of single symbols oriented in one of a horizontal vector and a vertical vector over the obfuscated symbol (*). Briefly, the short list is shortened to a centered portion for the range of available alphanumeric symbols, for example 2,3,4,5,6 of digits 0-9 when the entry element centered over the obfuscated symbol is 4. Another example of a short-list range is 4,5,6,7,8 of digits 0-9 when the entry element centered over the obfuscated symbol is 6, for example, needed in order to accommodate for UI font sizes and display screen size.

The short-list **107** is positioned over the obfuscated symbol to show a default selection **108** of an alphanumeric symbol within the short-list. The default values for the initial selection may be randomized, configured/set manually, or preset by way of a learned group swipe pattern discussed ahead. The application **14** detects a scrolling of the short-list **107** responsive to fingertip sliding, swiping motions, or to-or-fro finger movements in a direction of the orientated short-list. The list may readjust and realign itself to orient with the direction of the finger slide or swipe. This readjustment filters out shaky finger movements and results in a smooth glide or soft update to the orientation and entry elements. The application **14** detects a stopping of the sliding at a single symbol in the short-list **107**, and updates the short-list to correspond to the single symbol, which is overlaid as the new default entry element **108** onto the obfuscated symbol. As shown in **FIG. 1B**, for example, when the user slides from 2 to 7, the short-list will be updated with 7 and shown as the default entry **108** where 2 previously appeared. The application **14** repeats the steps above for each of the at least one entry element contained in the short-list **107** for completing alphanumeric symbol entry of the PIN in the entry field, until all PIN entries are filled up.

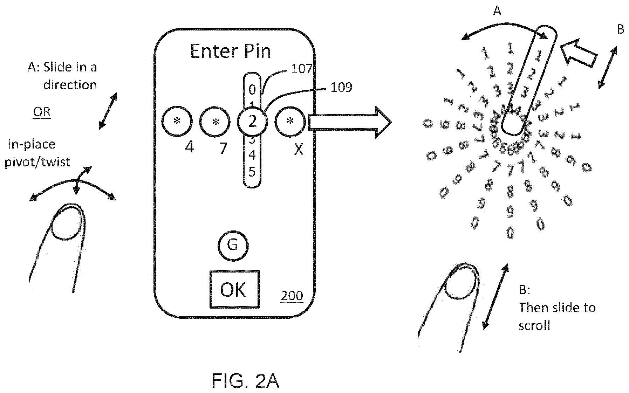

**FIG. 2A** illustrates a device embodiment providing touchscreen finger entry for multi-direction selection of a Personal Identification Number (PIN). Here, the application **14** detects a slide or swipe in any directional vector over an entry element, and visually orients the short-list **107** in the direction of the slide or swipe. Here, as seen on the left side, the direction is shown as vertical but all directional vectors are supported. The user can position their finger over the obfuscated symbol, and after the short-list is visually presented, select a corresponding entry element which becomes the new default entry **109.** The obfuscated symbol is then restored once the entry is completed (e.g. finger stops). In this example, after repeating the process for the first three entries in the entry field, the PIN entries will be 472x, though the 4, 7 and X are not actually shown on the screen. Rather, the interim values are shown only during a finger selection of the active entry for that entry element.

When the short-list is too long to display on the touchscreen, the app **14** shortens the range-hence the term "short-list"-and provides rotary selection. This may occur, for example, when the full range of numbers 0-9 cannot be shown because of the limited display or font size. Rotary selection is the process by which the user scrolls through elements in the short-list in-place along the horizontal, vertical, or diagonal vector displayed. For example, rotary selection to 4 in the short-list of 0,1,2,3,4,5 rotates the short-list to the range of 2,3,4,5,6,7. The application **14** configures rotary selection along the horizontal, vertical, or vector according to user input for a respective entry element. More specifically, a vector direction is mapped to a rotary scroll direction of the short-list, and a vector distance is mapped to a numerical offset of the rotary scroll, which is visually expressed as a new default entry element of the short-list over the obfuscated symbol. In one arrangement, the application **14** detects an in-place twisting or pivoting of the fingertip at a touch-screen location (which may occur at any time when the finger is positioned over an entry element), and then visually orients the short-list with rotary selection in that vector according to rotation of the twisting, or angle of the pivoting; all this, without further movement or sliding of the finger. That is, the fingertip is the pivot point, and the app determines the desired direction for orientation by sensing circumferential pressure and positional changes around the fingertip on the touchscreen.

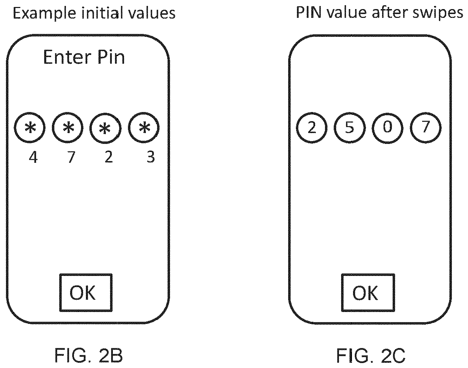

**FIG. 2B** shows a representative set of starting digit positions. Here, the first digit, from left, is 4 and last one is 3. In this example, the initial PIN of 4723 is hidden and entry elements are shown as obfuscated symbols; namely, astrixes (*). Once the user starts to swipe each digit, the application **14** updated the display with the corresponding starting digit (e.g. 4723). The application also supports a randomization mode for this initial value. When this option is enabled, the touchscreen displays a random value for each starting digit. This adds greater security to swipe operation, although it requires more involved actions from user. **FIG. 2C** shows the actual PIN the user wants to enter; namely, 2507. This means the swipe operations will be as follows:
- Digit 1: swipe down two places
- Digit 2: swipe down two places
- Digit 3: swipe down two places
- Digit 4: swipe up four places

In this manner, the initial hidden values for the PIN 4723 are transposed to 2507 by way of the separate individual user swipes. In any of the multi-direction rotary selection modes, the application **14** minimizes threats like hand movements, finger shaking, and shoulder surfing. This data entry design accepts also any text otherwise typically entered through a graphical keyboard. The user can swipe in any direction, and as the user swipes, data will be visible in a small visible section, and then replaced by the obfuscation symbol when the swipe ends. The user interface of the device presenting the touchscreen is augmented to accommodate any reasonable length of small data entry (PIN or password) in numeric or alphanumeric format.

The numbers can be configured to appear in any order in the short-list, for example, ascending, descending or random. The numbers are exposed in a small window so would be difficult for shoulder surfer, on the same time user can see which number to pick. Once the swipe stops and the number is picked, the number is obfuscated, e.g. with (*), or a change of color. The user will repeat the same swipe to make a complete PIN. Since user is pressing at same spot so it's extraordinarily difficult for an attacker to know which number is being pressed, in contrast, to entry of a static PIN PAD. In the inventive solutions described herein, the user can enter the same PIN in multiple ways, in any order, and, the app identifies and picks the numbers from any direction swipe. The application 14 also provides a configurable starting position of characters for each digit. This will result in easy swipe operations, and help reduce the time to complete swipe for all digits. In use-cases where security is more important than usability, the app can be configured to display random starting digits as well.

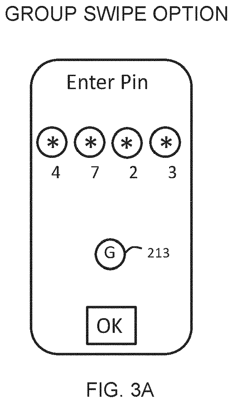

**FIG. 3A** shows a touchscreen User Interface (UI) that introduces a group button component **213** for configuring a concurrent entry field swipe operation. In this group mode, the user interacts with a single virtual group digit, indicated by the "G" button **213.** The extent of the concurrent value change of elements in the entry field may be a function of the finger swipe distance, pressure, speed and direction, or any combination thereof. The swipe operations on this virtual digit are applied to all actual digits concurrently by the application **14** according to the extent. In one arrangement, the touchscreen presents the group button **213**, and responsive to a directional swipe of the group button, the application **14** concurrently offsets all entry elements in the entry field a same amount according to a direction and distance of the swipe. Taking the starting values from **FIG. 2B** (4723) and the actual PIN value from **FIG. 2C** (2507), the user's interaction, including a group swipe option, as one example, is as follows:
- Digit G: swipe down two places
- Digit 1: none
- Digit 2: none
- Digit 3: none
- Digit 4: swipe up six places

The PIN value is shown in each entry element of the entry field. Group swipe is a user performance (UX) optimization to reduce user interactions, for example, limiting the total number of necessary swipes. Instead of having to swipe each of the four digits individually, the user need only swipe one group digit G, and then swipe any remaining ones (if any) to do final correction. When swiping four digits separately, the numeric value is shown in the small window. The same applies in group swipe. Numeric values in each of the corresponding windows are shown to user, they all change concurrently in the same direction based on swipe. The user does not have to calculate the offset. The advantage of this is that instead of four swipes the user now does only two swipes. During group swipe the new PIN value of 2507 will be shown, but only while the G button is being help down during swipe. Once the finger is lifted to indicate swipe is complete, the value in four circles goes back to *, they are obfuscated. To see them again user can hold down G again if needed.

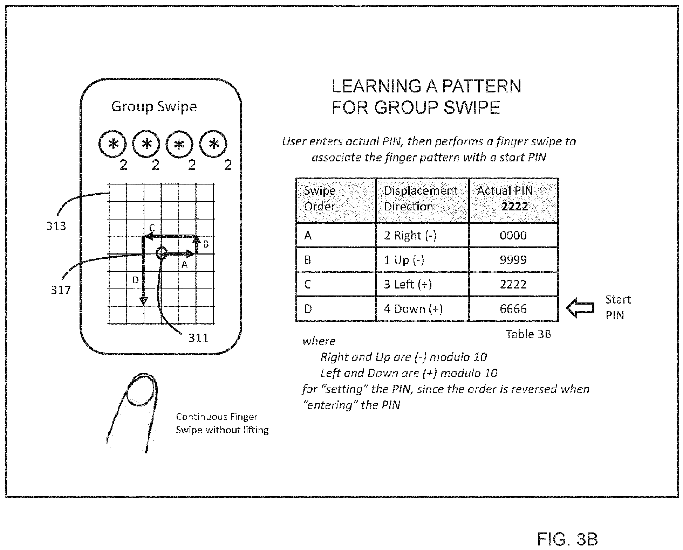

**FIG. 3B** shows an exemplary illustration of a group swipe setup for "learning" a pattern. The intent of this setup is to allow a user to draw a pattern **317** which will then be converted into an initial configuration; namely, an initial starting position of each digit. The learning phase correlates the PIN with the swipe pattern. Then later, responsive to detecting that swipe pattern, the application **14** individually offsets all entry elements in the entry field an individual amount according to the learned group swipe pattern. In order to do learn, the application receives from the user two inputs: 1) the actual PIN value, and 2) the user swipe pattern. The application supports this dual input in any order. Once these are entered, the application **14** configures the initial start value of each digit. The user interacts with the setup UI by holding and dragging the dot **311.** The application interprets dragging of the dot **311** along a horizontal or vertical or diaganol path trajectory.

Here, a grid **313** is shown, as a visual reference, but it is not initially displayed by the touchscreen. Rather, in practice, the user is presented with the display of **FIG. 3A** showing only the group button **213** and the entry elements and. In practice, the user will trace the finger pattern **317** starting from the group button **213** into a continuous pattern within the bounds of the touchscreen. Once the app **14** detects a finger press and continuous tracing movement, it may then overlay the grid **313** as a visual reference, if configured to do so. The grid overlay is a user setting option. It should also be noted that the initial starting positions can be configured in such a way that the user only interacts with digit "G", with no additional swipes needed on any actual digit. That is, the user can hold their finger over, or on, the dot **311**, or the group button **213**, and then commence a simple swipe motion, a complex swipe, a multiswipe pattern or continuous finger pattern **317.** Benefits of this approach include entering of data values through multi-directional swipes, mapping of text data to configurable user swipe patterns, and entering of same data values through multiple different swipe patterns, all which achieve obfuscation of key strokes and reduce likelihood of shoulder surfing.

Table 3B shows the relationships between the swipe order, the displacement direction, and the actual PIN. In practice, the application **14**, responsive to requesting the user to enter an actual PIN in the entry field and a group swipe pattern on the touchscreen, associates the group swipe pattern with the actual PIN, and configures an initial start PIN for the entry field according to said association. Here, in this example, the user first enters the actual PIN (2222), then performs a finger swipe to associate the finger pattern with a start PIN. As the pattern 317 is generated from the individual swipes (A,B,C,D) the actual PIN is updated respectively (0000,9999,2222,6666). These interim values are not show to the user; rather, they occur within the app behind the scenes. The entry elements are incremented and decremented concurrently with the value of the group swipe. On this point, it should be noted that the order (ascending, descending, or randomization) of the numbers in the short-list visually presented over the group swipe button 213 and other entry elements in the entry field is relevant to this PIN update.

The visual presentation of the numbers in the short-list **107** in one of an ascending, descending or random order with respect to directions (up, down, left, right) is related to a mapping operator when describing the learning (e.g., "setting" the PIN ) and applying (e.g. "setting" the PIN) of a group swipe. Here, Right & Up movements are (-) modulo 10, and Left & Down are (+) modulo 10 for "setting" the PIN, for the range of 10 digits 0 to 9. This order of mapping operators is reversed when "entering" the PIN. This also explains why the short-list **107** in **FIG 1B** shows a top to bottom range of 0, 1, 2 .... 7, and why **FIG 1C** shows a left to right range of 9, 8, 7 .... 1.

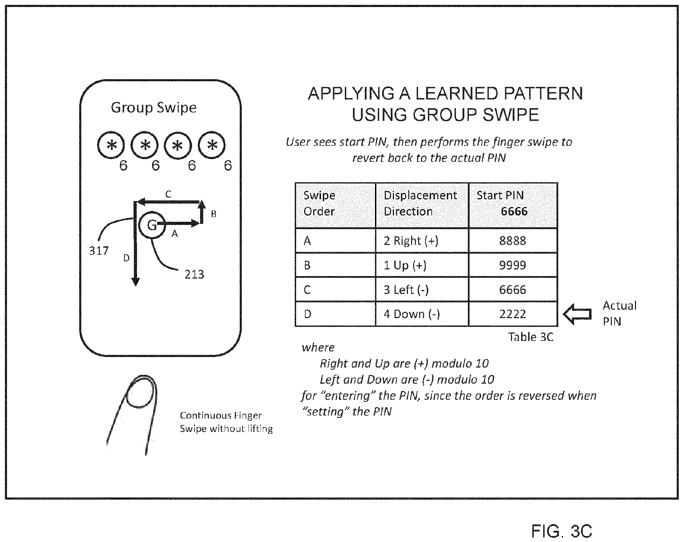

**FIG. 3C** shows an exemplary illustration for applying a learned pattern using group swipe. In essence, this is an application of the set-up of **FIG. 3B** wherein the previously learned pattern is applied to the entry field for quickly entering the PIN. In practice, the application **14**, responsive to the user entering said group swipe pattern on the touchscreen, reverts the initial start PIN to the actual PIN. Table 3C shows the relationships between the swipe order, the displacement direction, and the actual PIN. Here, in this example, the user performs a finger swipe that results in the entering of the actual PIN. The start position is 6666, as computed in steps of **FIG 3B**. The user need not remember this value. As the user touches the "G" button **213** this value will appear in place of the *. The user now repeats the pattern selected in **FIG 3B**. Table 3C shows how this pattern will convert the "start" PIN to eventual PIN. After four swipes, the start PIN of 6666 will become 2222. This final value is the actual user PIN.

Advantageously, the user only has to remember the pattern **317** to reproduce the PIN. Even if start PIN value of 6666 and intermediate PIN values after each individual swipe (last column of Table 3C) are not displayed, the user can still rely solely on pattern to enter the PIN. Displaying the start and intermediate values is merely a visual aide to user, and can be removed as an added security measure. Furthermore, the application 14 can detect deviations in the group swipe pattern affecting a perfect reversion of the initial start PIN to the actual PIN, and presents the deviations as entry elements in the entry field, thereby permitting the user to repeat the steps above for each of the at least one entry element contained in the short-list for completing and correcting entry of the actual PIN in the entry field in view of the start PIN and group swipe pattern. That is, even if the user doesn't perfectly recreate the learned swipe pattern, the user has the ability to manually refine element entries using multi-direction PIN entry as previously described. Moreover, the extent of the manual refinement is minimal because the digits are close to actual. For example, an imperfect swipe pattern may result in 2221 which only requires a single digit change of the last entry to 2222.

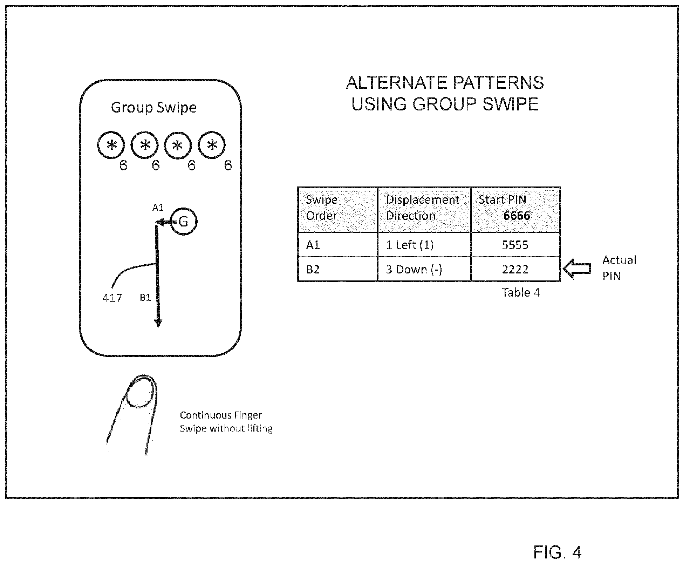

**FIG. 4** shows an exemplary illustration of a group swipe setup for applying an alternate pattern using group swipe. That is, it is also possible to get the same PIN by using a different pattern than the one selected in **FIG 3B**. This can be another security enhancement for advanced users. In this case only two swipe are used. The start PIN of 6666 is still converted to 2222 which is the actual PIN. This way different patterns can result in same PIN value. It is another safe guard against shoulder surfing. Here too, a convention is followed when "entering" PIN, versus "setting" the PIN, according to mapping operators, for example, Up/Right = plus and Down/Left = minus for "entering" PIN, and reversed order for "setting" the PIN. *Here, Right & Up movements are (*+*) modulo 10, and Left & Down are (*-*) modulo 10 for "entering" the PIN, since the order is reversed when "setting" the PIN.*

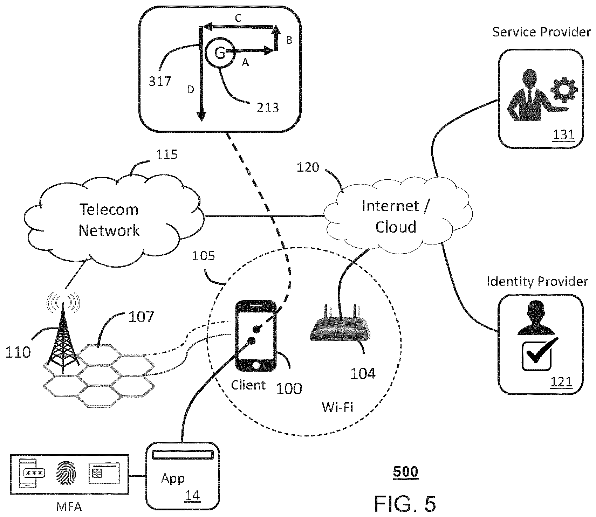

**FIG. 5** depicts an exemplary communication environment **500** providing telecommunication, Internet and cloud services within an Identity and Access Management (IAM) ecosystem. The Client **101**, Identity Provider **121** and Service Provider **131** are communicatively coupled together, and to components and network devices in the communication environment **500.** The app **14** provides for multi-direction selection of a Personal Identification Number (PIN) as previously described herein. It also provides and accepts multiple factor authentication (MFA), secure one-time passcode (OTP) generation, as well as single-tap push or pull authentication. In one exemplary embodiment, the app 14 sends the learned pattern **317** (see FIG 3B) to the Identity Provider **121** to further authenticate the user with registered credentials, for example, to validate a stroke sequence, touch pressure points, swipe movements associated with the user's style and trained behaviors. As another example, the Service Provider **131** may be an Independent Service Vendor that created the app 14 and desires to obtain licensing value from its use, or how the app is being used. Alternatively, it may also serve to securely encrypt and store the user's learned patterns and associate it with access rights to other apps.

In one embodiment, the app **14** is coupled, or integrated, with Thales' OneWelcome MobilePASS^{®} family of one-time password (OTP) software authentication solutions that combines the security of proven two-factor strong authentication with use of OTPs generated on the device 100. The additional layer of shoulder surfing protection provided by the app **14**, provides powerful identity protection and convenient access control for remote access systems, such as VPNs, network applications, Cloud applications, Web Access, and Web portals. The system **500** provides for central management of the app **14** and device **100** alongside other 3^{rd} party authentication solutions thereby enabling organizations to adopt a layered approach to security by deploying different authentication devices and methods for different groups of users.

The communication environment **100** can include a telecommunication network **115** and an internet communication network (internet) **120.** The telecommunication network **115** can provide a mobile communication link via base receiver **110** for wireless connectivity of a mobile device **102** from one or more cells **107.** In one arrangement, the mobile device **102** can communicate over a Radio Frequency (RF) link with the base receiver **110** using a standard communication protocol such as legacy 2G (CDMA, GSM) and 3G, or LTE 4G and 5G. The base receiver **110**, in turn, can connect the mobile device **102** to the internet **120** over a packet switched link. The internet can support application services and application service layers to provide media or content to the mobile device **102.** By way of the communication environment **100**, the mobile device **102** can establish connections with a service provider **80** and identity provider **70** on the network and with other mobile devices to exchange information or to provide services such as audio, text messaging, media, audio, video, interactive applications, and the like. The service provider **80** can have access to a database that is stored locally or remotely and which can contain profile data. It can also host application services directly, or over the internet **120.**

The mobile device **102** can also connect to the internet over a Wi-Fi or WLAN 105. Wireless Local Access Networks (WLANs) provide wireless access to the mobile communication environment within a local geographical area. WLANs can also complement loading on a cellular system, so as to increase capacity. Wi-Fi is the wireless technology used to connect computers, tablets, smartphones and other devices to the internet. The mobile device **102** can send and receive data to the service provider **80**, identity provider **70** and other remote servers on the mobile communication environment. In one example, the mobile device **102** can send and receive audio, video, or other multimedia content from the database to these providers, for example, photos or licenses for identity proofing.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A device for multi-direction selection of a Personal Identification Number (PIN), the device comprising:
a touchscreen display presenting an entry field for a PIN; and
an application communicatively coupled to the touchscreen display, wherein the application configures and executes operational steps of:
detecting a fingertip over at least one entry element containing an obfuscated symbol in the entry field;
responsive to the detecting, visually presenting over the obfuscated symbol, an alphanumeric short-list of single symbols oriented in a horizontal vector or vertical vector;
wherein the short-list is positioned over the obfuscated symbol to show a default selection of an alphanumeric symbol;
detecting a scrolling of the short-list responsive to fingertip sliding to-or-fro in a direction of the orientated short-list;
detecting a stopping of said sliding at a single symbol in the short-list, and updating the short-list to correspond to said single symbol and overlay onto the obfuscated symbol;
repeating the steps above for each of the at least one entry element contained in the short-list for completing alphanumeric symbol entry of the PIN in the entry field; and
a processor and memory, wherein the memory includes computer instructions which when executed by the processor causes the processor to perform said operational steps.

2. The device of claim 1, wherein the application
detects a slide or swipe in any direction over an entry element; and
visually orients the short-list with rotary selection in the direction of the slide or swipe.

3. The device of claim 1, wherein the application
detects an in-place twisting or pivoting of the fingertip at a touch-screen location, and
visually orients the short-list with rotary selection along a diagonal vector according to rotation of the twisting, or angle of the pivoting, without further movement or sliding of the finger.

4. The device of claim 1, wherein the application is a native program or installed app that responsive to entry of the PIN for all entry elements in the entry field unlocks the device or provides access to another app or resources thereon.

5. The device of claim 1, wherein the touchscreen further presents a group button, and responsive to a directional swipe of the group button, the application concurrently offsets all entry elements in the entry field a same amount according to a direction and distance of the swipe.

6. The device of claim 5, wherein said direction is mapped to a rotary scroll direction of said short-list, and said distance is mapped to a numerical offset of the rotary scroll that is visually expressed as a new default entry element of said short-list over the obfuscated symbol.

7. The device of claim 1, wherein the touchscreen further presents a group button, and responsive to a learned group swipe pattern, the application individually offsets all entry elements in the entry field an individual amount according to the learned group swipe pattern.

8. The device of claim 6, wherein the application, responsive to requesting the user to enter an actual PIN in the entry field and a group swipe pattern on the touchscreen, associates the group swipe pattern with the actual PIN, and configures an initial start PIN for the entry field according to said association.

9. The device of claim 8, wherein the application, responsive to the user entering said group swipe pattern on the touchscreen, reverts the initial start PIN to the actual PIN.

10. The device of claim 8, wherein the application detects deviations in the group swipe pattern affecting a perfect reversion of the initial start PIN to the actual PIN, and presents the deviations as entry elements in the entry field, thereby permitting the user to repeat the steps above for each of the at least one entry element contained in the short-list for completing and correcting entry of the actual PIN in the entry field in view of the start PIN and group swipe pattern.

11. A method for multi-direction selection of a Personal Identification Number (PIN), that
by way of a touchscreen display presenting an entry field for a PIN; and
by way of an application communicatively coupled to the touchscreen display, the application configures and executes said operational steps of:
detecting a fingertip over at least one entry element containing an obfuscated symbol in the entry field;
responsive to the touching, visually presenting over the obfuscated symbol, an alphanumeric short-list of single symbols oriented in one of a horizontal vector and a vertical vector;
wherein the short-list is positioned over the obfuscated symbol to show a default selection of an alphanumeric symbol;
detecting a scrolling of the short-list responsive to fingertip sliding to-or-fro in a direction of the orientated short-list;
detecting a stopping of said sliding at a single symbol in the short-list, and updating the short-list to correspond to said single symbol and overlay onto the obfuscated symbol;
repeating the steps above for each of the at least one entry element contained in the short-list for completing alphanumeric symbol entry of the PIN in the entry field; and
a processor and memory, wherein the memory includes computer instructions which when executed by the processor causes the processor to perform said operational steps.

12. The method of claim 11, wherein the application
detects a slide or swipe in any direction over an entry element,
configures a diagonal vector for rotary selection of the PIN in the short-list; and visually orients the diagonal vector in the direction of the slide or swipe.

13. The method of claim 11, wherein the application
detects an in-place twisting or pivoting of the fingertip at a touch-screen location; and
configures a diagonal vector for rotary selection of the PIN in the short-list; and visually orients the diagonal vector according to rotation of the twisting, or angle of the pivoting, without further movement or sliding of the finger.

14. The method of claim 11, wherein the application is a native program or an installed app that responsive to entry of the PIN for all entry elements in the entry field unlocks the device or provides access to another app or resources thereon.

15. The method of claim 11, wherein the touchscreen further presents a group button, and responsive to a directional swipe of the group button, the application concurrently offsets all entry elements in the entry field a same amount according to a direction and distance of the swipe.

16. The method of claim 15, wherein said direction is mapped to a rotary scroll direction of said short-list, and said distance is mapped to a numerical offset of the rotary scroll and visually expressed as a new default entry element of said short-list over the obfuscated symbol.

17. The method of claim 11, wherein the touchscreen further presents a group button, and responsive to a learned group swipe pattern, the application individually offsets all entry elements in the entry field an individual amount according to the learned group swipe pattern.

18. The method of claim 16, wherein the application, responsive to requesting the user to enter an actual PIN in the entry field and a group swipe pattern on the touchscreen, associates the group swipe pattern with the actual PIN, and configures an initial start PIN for the entry field according to said association.

19. The method of claim 18, wherein the application, responsive to the user entering said group swipe pattern on the touchscreen, reverts the initial start PIN to the actual PIN.

20. The method of claim 18, wherein the application detects deviations in the group swipe pattern affecting a perfect reversion of the initial start PIN to the actual PIN, and presents the deviations as entry element in the entry field, thereby permitting the user to repeat the steps above for each of the at least one entry element contained in the short-list for completing and correcting entry of the actual PIN in the entry field in view of the start PIN and group swipe pattern.
